# EUROPEAN PATENT APPLICATION

(11) **EP 2 942 742 A1**
(43) Date of publication of application: **11.11.2015**
(21) Application number: 14290136.2
(22) Date of filing: 05.05.2014
(51) Int. Cl.: G06Q 10/02, G06Q 30/02, G06Q 50/00, G06Q 50/14

(54) **Virtual forum for travel services**

(71) Applicant: Amadeus S.A.S., 06410 Biot (FR)
(72) Inventor: Di Pierro, Geronimo,, 06600 Antibes (FR); Dubuc, Simon, 06600 Antibes (FR)
(74) Representative: Samson & Partner Patentanwälte mbB

(57) **Abstract**

Methods, systems, and computer program products for communicating between a travel service provider and a plurality of travelers using a virtual social network. A virtual forum is created in a virtual social network and associated with a travel service provided by a travel service provider. The virtual forum may be linked with user accounts in the social network belonging to travelers who have booked the travel service. The links may be defined in response to the traveler booking the travel service, or by the traveler requesting the link. The travel service provider may then provide information relating to the travel service to the traveler via the virtual forum. The virtual forum may further provide a communications medium for travelers to interact with other travelers. Interested parties who have not booked the travel service may be able to access a portion of the information available through the virtual forum.

## Description

### BACKGROUND

The invention generally relates to computers and computer software, and in particular to methods, systems, and computer program products for providing communications among travelers and travel service providers using virtual social networks.

Travelers using commercial travel services typically reserve a specific travel service by booking the service in advance of departure. After the service has been booked, the next contact between the traveler and the travel service provider often does not occur until check-in. Thus, the traveler is often unaware of changes to the travel service that occurred after the service was booked, such as a change in the departure time or terms of service. A lack of communication may continue during the service and after the service is provided. Thus, travelers may have difficulty determining the progression of the service or operational events, such as delays or canceled travel segments, which may require changes to their itinerary. Travelers may also be unaware of additional services available during and after traveling that would improve their travel experience. After the service has been provided, the travel service provider may also have difficulty obtaining feedback from, or providing follow-up to, the traveler.

In addition to the lack of communication between the service provider and the traveler, travelers may also have limited opportunities for communicating and sharing information with other travelers while traveling. Travelers are often confined to their seat for lengthy amounts of time while they are conveyed between origination and destination locations by the travel service. Thus, travelers may be limited to talking to whoever happens to be sitting next to them. This experience can be frustrating for many travelers, especially if they have little in common with the neighboring passengers. Although some travel services provide dining and bar areas where travelers can mingle and pass the time, these areas typically have limited availability, and may not appeal to some travelers. In addition, some travelers are reluctant to start conversations or otherwise interact with other travelers who they know little about.

Thus, improved systems, methods, and computer program products are needed that improve communication between travel providers and travelers, and that enable travelers to interact with each other while traveling.

### SUMMARY

In an embodiment of the invention, a method of communicating using a virtual social network is provided. The method includes defining a travel service for transporting a plurality of travelers, and in response to defining the travel service, defining a virtual forum in the virtual social network. The method further includes associating the virtual forum with the travel service.

In another embodiment of the invention, an apparatus for communicating using the virtual social network is provided. The apparatus includes one or more processors, and a memory including instructions that, when executed by the one or more processors, cause the apparatus to define the travel service for transporting the plurality of travelers, and in response to defining the travel service, define the virtual forum in the virtual social network. The instructions further cause the apparatus to associate the virtual forum with the travel service.

In another embodiment of the invention, a computer program product is provided that includes a non-transitory computer-readable storage medium including instructions. The instructions are configured so that, when executed by the processor, they cause the processor to define the travel service for transporting the plurality of travelers, and in response to defining the travel service, define the virtual forum in the virtual social network. The instructions further cause the processor to associate the virtual forum with the travel service.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a Global Distribution System (GDS), a social networking system, a service provider system, a traveler system, and a travel agency system.
FIG. 2 is a diagrammatic view of an exemplary computer that may be used for implementing the systems of FIG. 1.
FIG. 3 is a diagrammatic view depicting communication between the traveler and travel agency systems of FIG. 1, the GDS, a service provider data management module, and a social media platform for creating a virtual forum and booking a travel service.
FIG. 4 is a diagrammatic view depicting relationships between a social mediasphere comprising a plurality of the social media platforms of FIG. 3, and a plurality of entities associated with the travel service.

### DETAILED DESCRIPTION

Embodiments of the invention may be implemented on one or more computing systems, such as a Global Distribution System (GDS) or social networking system. The computing system may be configured to allow travelers to book travel services, such as seats on a train or plane, a berth on a cruise ship, or any other type of travel service. Embodiments of the invention may define a virtual forum and associate the virtual forum with a travel service. Travelers who have booked the travel service may join or link to the virtual forum to access and share information relating to the service, or to communicate with other people who have also booked or are otherwise interested in the travel service. To this end, the virtual forum may be linked to a social media account maintained by the traveler on a social networking service such as, for example, Facebook® or Twitter®. This linking may occur automatically in response to the traveler booking the travel service, or in response to the traveler requesting the link. Once the traveler has linked their social media account to the virtual forum, information may be provided to the traveler through the virtual forum.

Exemplary shared information may include status updates relating to the travel service (e.g., on-time, delayed, canceled, weather conditions at the arrival or departure locations), offers to purchase additional services or upgrades, or any other travel-related information that may be of interest to the traveler. During the trip, the service provider may disseminate information related to operation of the travel service, such as expected arrival time, current position, or expected delays, using the virtual forum. The virtual forum may also provide a catalyst for social interaction during the trip by allowing travelers to find out about other travelers' interests, and otherwise communicate with other travelers. Travelers may also access social media applications that provide on-board services and entertainment, such as games. After the trip, the virtual forum may facilitate follow-up by the travel provider to address service issues and provide a communication medium for customer relationship management by the travel service provider.

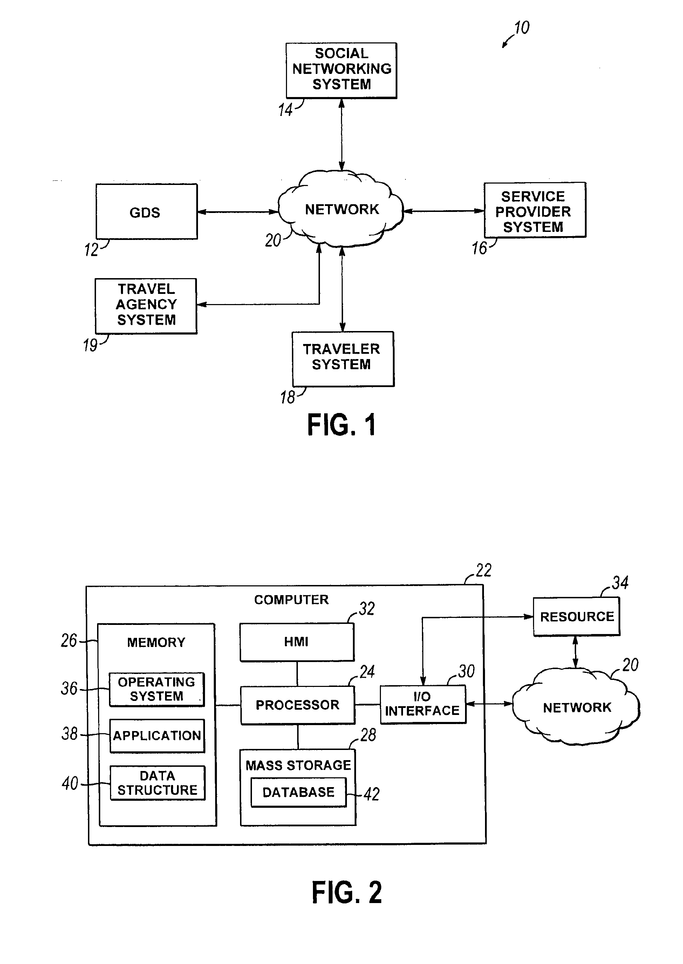

Referring now to FIG. 1, an operating environment 10 in accordance with an embodiment of the invention may include the Global Distribution System (GDS) 12, the social networking system 14, a service provider system 16, a traveler system 18, and a travel agency system 19. Each of the GDS 12, social networking system 14, service provider system 16, traveler system 18, and travel agency system 19 may communicate through a network 20. The network 20 may include one or more private or public networks (e.g., the Internet) that enable the exchange of data.

The GDS 12 may be configured to facilitate communication between the social networking system 14, the service provider system 16, the traveler system 18, and the travel agency system 19. The GDS 12 may thereby enable travelers to book reservations on the service provider system 16 via the GDS 12 and travel agency system 19. To this end, the GDS 12 may maintain links to a plurality of provider systems, such as the service provider system 16, via the network 20. These links may allow the GDS 12 to route reservation requests received from the travel agency system 19 to the service provider system 16. The GDS 12 may thereby enable the travel agency system 19 to book services from multiple service providers. The GDS 12 may also facilitate communication between the social networking system 14 and the service provider system 16. For example, the GDS 12 may transmit information for creating virtual forums, and information relating to travel services for dissemination by the virtual forum, to the social networking system 14. The GDS 12 may also receive information from the social networking system 14, such as updates to user accounts or virtual forums, requests for information relating to a travel service, or any other suitable information.

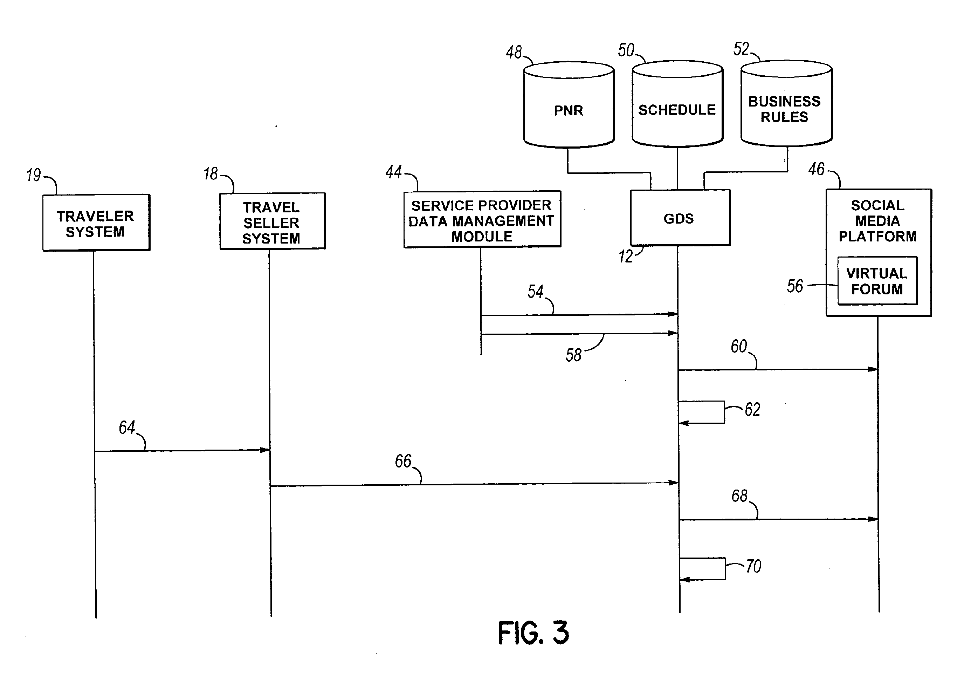

In response to the traveler booking a ticket, the GDS 12 may receive and store a Passenger Name Record (PNR). The PNR may be generated, at least in part, by the service provider system 16, and may comprise one or more reservation records that contain itinerary and traveler information associated with one or more booked reservations. The PNR may be stored in a PNR database 48 (FIG. 3) accessible to the GDS 12, and may include data defining an itinerary for a particular trip, passenger, or group of passengers. The defined itinerary may include travel services from multiple travel service providers. To facilitate locating the PNR in the PNR database 48, a record locator or other suitable identifier may be associated with the PNR.

The service provider system 16 may include a Computer Reservation System (CRS) for the respective travel service provider. The CRS may include one or more databases for storing and retrieving data related to reserving travel services, tracking service provider inventory, and issuing electronic tickets for the reserved travel services. The service provider system 16 may also provide information to the GDS 12 regarding the status of a booked travel service, such as on-time status, availability, pricing updates, or any other suitable information. For example, in response to receiving data indicating that the traveler has checked-in at the departure point, boarded the conveyance, or received some other service, the service provider system 16 may transmit data to GDS 12 indicating a change in status of the traveler. The GDS 12 may then provide data to the social networking system 14 that reflects this change.

The traveler system 18 may comprise any suitable computing device that enables the traveler to access the social networking system 14. Exemplary computing devices may include, but are not limited to: a desktop computer, laptop computer, tablet computer, personal digital assistant, or smart phone. The social networking system 14 may provide a platform for a virtual social network. The virtual social network may comprise, for example, a plurality of user accounts that are selectively interconnected by virtual links. The virtual links may identify virtual relationships between the user accounts they link. Users having an account may create a user profile and a list of other users with whom they are connected. The virtual social network may thereby enable users to share information regarding their interests, activities, and background. This sharing of information may encourage users to form real-life connections with other users having similar interests. To provide access to users, the social networking system 14 may include one or more applications that allow the traveler system 18 to access the virtual social network, such as a web server application.

The travel agency system 19 may be configured to book travel through the GDS 12, and may be operated by a bricks-and-mortar travel agency, an on-line travel agency, a travel management company, or any other entity that sells or books travel services for travelers. To this end, the travel agency system 19 may include one or more applications that allow travelers to access the GDS 12. The travel agency system 19 may also include one or more web server applications that allow the traveler to book travel using a web browser or other application running on the traveler system 18.

Referring now to FIG. 2, the GDS 12, social networking system 14, service provider system 16, traveler system 18, and travel agency system 19 of operating environment 10 may be implemented on one or more computer devices or systems, such as exemplary computer 22. The computer 22 may include at least one processor 24, a memory 26, a mass storage memory device 28, an input/output (I/O) interface 30, and a Human Machine Interface (HMI) 32. The computer 22 may also be operatively coupled to one or more external resources 34 via the network 20 or I/O interface 30.

The processor 24 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 26. Memory 26 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 28 may include data storage devices such as a hard drive, optical drive, tape drive, non-volatile solid state device, or any other device capable of storing information.

Processor 24 may operate under the control of an operating system 36 that resides in memory 26. The operating system 36 may manage computer resources so that computer program code embodied as one or more computer software applications, such as application 38 residing in memory 26, may have instructions executed by the processor 24. In an alternative embodiment, the processor 24 may execute the application 38 directly, in which case the operating system 36 may be omitted. One or more data structures 40 may also reside in memory 26, and may be used by the processor 24, operating system 36, or application 38 to store or manipulate data.

The I/O interface 30 may provide a machine interface that operatively couples the processor 24 to other devices and systems, such as the network 20 or external resource 34. The application 38 may thereby work cooperatively with the network 20 or external resource 34 by communicating via the I/O interface 30 to provide the various features, functions, or modules comprising embodiments of the invention. The application 38 may also have program code that is executed by one or more external resources 34, or otherwise rely on functions or signals provided by other system or network components external to the computer 22.

The computer 22 and application 38 may be used to provide one or more servers that respond to requests across the network 20. Each server may also comprise multiple applications 38 running across a plurality of computers 22, a single application 38 running on a single computer 22, or combinations thereof. Indeed, given the nearly endless hardware and software configurations possible, persons having ordinary skill in the art will understand that embodiments of the invention may include applications that are located externally to the computer 22, distributed among multiple computers or other external resources 34, or provided by computing resources (hardware and software) that are provided as a service over the network 20, such as a cloud computing service.

The HMI 32 may be operatively coupled to the processor 24 of computer 22 in a known manner to allow a user to interact directly with the computer 22. The HMI 32 may include video or alphanumeric displays, a touch-screen, a speaker, and any other suitable audio and visual indicators capable of providing information to the user. The HMI 32 may also include input devices and controls such as the aforementioned touch-screen, an alphanumeric keyboard, a pointing device, keypads, pushbuttons, control knobs, microphones, etc., capable of accepting commands or input from the user and transmitting the entered input to the processor 24.

A database 42 may reside on the mass storage memory device 28, and may be used to collect and organize data used by the various systems and modules described herein. The database 42 may include data and supporting data structures that store and organize the data. In particular, the database 42 may be arranged with any database organization or structure including, but not limited to, a relational database, a hierarchical database, a network database, or combinations thereof. A database management system in the form of a computer software application executing as instructions on the processor 24 may be used to access the information or data stored in records of the database 42 in response to a query, where a query may be dynamically determined and executed by the operating system 36, other applications 38, or one or more modules.

Referring now to FIG. 3, the GDS 12 may be in communication with a data management module 44 of the service provider, a social media platform 46, the PNR database 48, a schedule database 50, and a business rules database 52. In an embodiment of the invention, the data management module 44 may be hosted by the service provider system 16, and the social media platform 46 may be hosted by the social networking system 14.

The GDS 12 may receive data 54 from the data management module 44 that defines one or more travel services for which a virtual forum 56 is to be created. The data 54 may include any data that uniquely identifies the travel services, such as flight numbers or train numbers, and dates the travel services are to be provided. The GDS 12 may also receive data 58 from the data management module 44 that defines virtual forum publication business rules. The business rules may define which travel services are to be associated with the virtual forum 56, as well as the lead time before departure for creating or otherwise making the virtual forum 56 available. For example, the virtual forum 56 may be created 3 months before the associated travel service is scheduled to depart, or the day before, depending on the type of travel service and the business rules of the travel service provider.

Based on the received data 54, 58, GDS 12 may query the databases 48, 50, 52 for information relating to a travel service that is to be associated with the virtual forum 56, such as scheduled time of departure, expected travel time, passenger lists, and business rules (e.g., overnight stay required), record locators, passenger identifiers (e.g., e-mail addresses), or any other suitable data. At the appropriate time prior to departure of the travel service, the GDS 12 may transmit a request 60 to the social media platform 46 to create or open the virtual forum 56. In response to receiving the request 60, the social media platform 46 may create the virtual forum 56. The social media platform 46 may create the virtual forum 56, for example, by defining an event page and associating the event page with an account on the social media platform belonging to the travel service provider. The travel service provider may then manage the virtual forum 56 using private access to the account. The virtual forum 56 may also comprise a private feed on the selected social media platform 46, or a specific account that defines followers. The GDS 12 may be in communication with multiple social media platforms 46, and virtual forums 56 may be created on a specific social media platform 46 or multiple social media platforms 46, depending on the travel service and service provider in question.

After the travel service has been scheduled, the GDS 12 may determine an event has occurred relating to the travel service. In response, the GDS 12 may send an event notification 62 to a reservation system back end, which may be part of the GDS 12. The reservation system may then determine if the traveler should be notified. If the reservation system determines the traveler should be notified, the traveler may be notified via the virtual forum 56.

To book the travel service, the traveler may transmit a request 64 from the traveler system 18 to the travel agency system 19. The request 64 may include data identifying the travel service that the traveler wants to book, and may be transmitted to the travel agency system 19 in response to the traveler providing an appropriate input to a user interface of the travel agency system 19. In response to receiving the request 64, the travel agency system 19 may transmit a request 66 to book the travel service to the GDS 12. In response to receiving the request 66, the GDS 12 may transmit a link request 68 to the social media platform 46 requesting the virtual forum 56 be linked to the traveler's social media account. To identify the traveler's social media account, the traveler may be asked to provide their social media account identity and password. In an embodiment of the invention, the GDS 12 may identify the traveler's social media account based on an e-mail address provided by the traveler, obtained from a PNR, or associated with the record locator of the PNR. If this is the first time that the traveler has provided their e-mail, the GDS 12 or travel agency system 19 may request the traveler provide a password to associate with the e-mail address. The traveler may then be registered in the system and assigned a new account so that the traveler can sign in using their e-mail and password for subsequent visits to the travel agency system 19 or GDS 12.

To enable the GDS 12 to request the social media platform 46 link the traveler's social media account to the virtual forum 56, the GDS 12 may require social media account information. This account information may include an identity of the social media account, and access codes or passwords. The GDS 12 may receive the account information from the traveler as part of the booking process. The account information may also be part of a traveler profile stored on the travel agency system 19, traveler system 18, or in another location accessible by the GDS 12. In any case, in response to receiving the social media account information, the GDS 12 may add the information 70 to the PNR associated with booked travel service in the PNR database 48.

The traveler's social media account may also be linked to the virtual forum 56 by virtue of being listed as an authorized follower of the virtual forum 56. Being listed as a follower of the virtual forum 56 may cause the traveler to receive updates automatically in response to data being pushed out to the traveler by the virtual forum 56. The traveler may also subscribe to the virtual forum 56 after booking the travel service, such as by logging into their social media account and requesting their account be linked to the virtual forum 56.

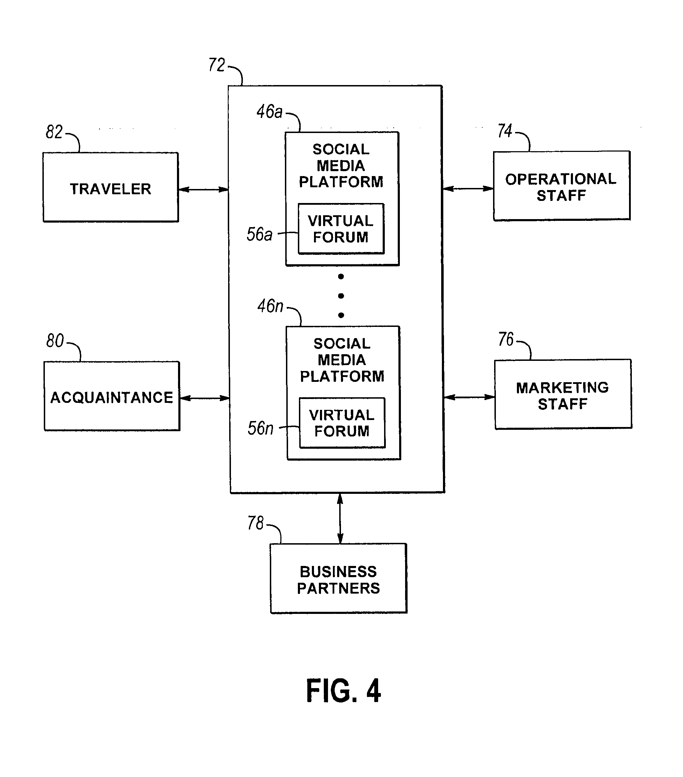

Referring now to FIG. 4, a social mediasphere 72 comprising one or more social media platforms 46a-46n may provide access to the one or more virtual forums 56a-56n. This access may be provided to operational staff 74, marketing staff 76, and business partners 78 of the travel service provider, as well as acquaintances 80 of the traveler and the traveler 82. The social mediasphere 72 may thereby provide a communications medium for exchanging information between a plurality of parties related to the travel service. Each of these entities may have a different access level to the social media platforms within the mediasphere. For example, the acquaintance 80 may have a lower access level than the traveler 82. This lower access level may prevent the acquaintance 80 from viewing all of the information available to the traveler 82. Similarly, business partners 78 may have an access level that does not allow them to see all of the information that is available to the operational staff 74 or marketing staff 76 of one of the social media platforms 46a-46n.

Information may be sent to the traveler 82 through one or more of the virtual forums 56a-56n through data feeds or social media accounts associated with the one or more virtual forums 56a-56n. For example, the operational staff 74 or marketing staff 76 of the travel service provider may selectively share information with the traveler 82 via one or more of the virtual forums 56a-56n before departure, during the trip, or after arrival. Customer relationship personnel from the marketing staff 76 may thereby follow-up with the traveler 82 after arrival in case of delay, or to request the traveler 82 fill out a customer survey. Business partners 78, such as businesses selling products or services in an airport terminal, rail station, or during the travel service, may use the virtual forums 56a-56n to share information on products, and to up-sell their products to the traveler 82. The information shared through the virtual forums 56a-56n may be selectively restricted to the traveler 82, or may be made publicly available.

The virtual forum 56 may also provide a communication medium for the traveler 82 to exchange information with other travelers 82 who have booked the travel service. This may include posting or otherwise sharing information relating to the travel service (e.g., advice on activities at the destination), chatting, or discovering topics to meet over and discuss while on-board the travel service. To this end, the virtual forum 56 may be configured to enable the traveler 82 to create a communication page in the virtual forum. The communication page may comprise an on-line gaming page that provides a multi-player on-line game, a chat room page that allows travelers to communicate with each other directly, or a shared media page that allows travelers 82 to post media such as text, pictures, audio, or video (e.g., for video telephony). In any case, the communication page may be configured so that other travelers 82 can request and receive access to the communication page.

The virtual forum 56 may also provide in-transit entertainment to travelers, such as games, which may be accessed using the traveler system 18. For example, the traveler may join interactive games with other travelers using the travel service, or may access information related to the travel service, such as the current location and expected time of arrival of the travel service. A portion of the information provided by the virtual forum 56 may also be publicly available, such as progress of the travel service or expected time of arrival. The acquaintance 80 of traveler 82 may thereby access this public information through their own social media account, for example, to be informed of potential delays in the arrival of the traveler 82.

Embodiments of the invention may enable travel service providers to generate unique virtual forums 56 that provide a communication medium specific to a travel service. The virtual forum 56 may be temporary, and may disappear upon the passing of a defined period after arrival. In an embodiment of the invention, portions of the virtual forum 56, such as selected postings by travelers, may be kept after the virtual forum 56 has been deleted. The virtual forum 56 may enable on-the-fly management of "friends" or "followers" by the travel provider, who may also manage security issues and provide access credentials. If the traveler 82 has provided their social media account information prior to or at the time of booking, the GDS 12 may automatically authorize the traveler 82 to enter the appropriate virtual forums 56a-56n at the time the travel service is booked. The traveler 82 may also request that their social media account be linked to one of the virtual forums 56a-56n, such as by logging into their account and sending a link request to the virtual forum 56. The traveler 82 may also enable the acquaintance 80 to gain access to the virtual forum 56 by, for example, sending an invitation to the acquaintance's social media account. Linking to the virtual forums 56a-56n may thereby be selectively controlled by the traveler 82.

As an example of a particular use of the virtual forum 56, one traveler 82 may book a train from Paris to Amsterdam for a specific departure time and date (e.g., April 21, 2013 at 1:00 PM). The traveler 82 may then enter the virtual forum 56 for that train and post a question for the other travelers on the train (e.g., "Does somebody know a good restaurant to get mussels in Amsterdam?"). Another traveler having booked the same train may then reply with an answer (e.g., "Try the Rijksen Restaurant. It provides an authentic Amsterdam experience."). Other travelers, including the traveler 82 posting the original question, may see the reply and vote for it. This vote may be a binary vote (e.g., like or dislike) or may include a rating (e.g., 1 to 5 stars). For example, other travelers on the train interested in eating mussels, or who agree with the recommendation, may rate the post highly. Thus, posts having a high value to the travelers 82 on the train may receive more votes than posts having a low value. Posts and the number of votes they received may be associated with the related travel service (e.g. the Paris-Amsterdam train 2014/04/21, Trn Nb: 234234) and archived in a database. In response to adding a new virtual forum 56 for a subsequent train service from Paris to Amsterdam, the GDS 12 (or any other suitable system) may search the archived posts database for one or more posts from a previous train. These posts may be selected based on their ranking or how many votes they received, and displayed in a sub panel on a side of the new virtual forum page. In this way, the posts may be accessible to travelers on the new train with the same origin and destination. In an alternative embodiment of the invention, relevant posts may be shown to travelers with only the origin or the destination in common. For example, posts relating to activities in Amsterdam made in a forum for a train from Paris to Amsterdam may be added to a virtual forum 56 for a train from Nice to Amsterdam.

Posts may also be used for data mining, either as they are made or by accessing the archived posts database. For example, the GDS 12 may determine a number of times a particular word is used in the posts of one or more virtual forums 56 associated with a particular origin-destination pair. The GDS 12 may thereby extract trending topics or subjects for travelers traveling between that origin and destination. This data may then be used to determine which advertisements to present in the virtual forum 56. For example, if the word "pizza" is appearing at a high frequency in posts to virtual forums 56 on trains going to Amsterdam, the GDS 12 may select advertisements for restaurants offering pizza for display in those virtual forums 56. This data may also be sold to third parties, such as rail transportation providers, so that these third parties can make informed business decisions, such as whether to add a particular item (e.g., pizza) to the in-transit menu.

The program code embodying any of the embodiments of the invention described herein is capable of being individually or collectively distributed as a program product in a variety of different forms. In particular, the program code may be distributed using a computer-readable media, which may include computer-readable storage media and communication media. Computer-readable storage media, which are inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer-readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer-readable media.

The methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, or components, but do not preclude the presence or addition of one or more other features, integers, steps, operations, elements, components, or groups thereof. Furthermore, to the extent that the terms "includes", "having", "has", "with", "comprised of", or variants thereof are used in either the detailed description or the claims, such terms are intended to be inclusive in a manner similar to the term "comprising."

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

## Claims

1. A method of communicating using a virtual social network, the method comprising:
defining, by a server, a travel service for transporting a plurality of travelers;
in response to defining the travel service, defining, by the server, a virtual forum in the virtual social network; and
associating, by the server, the virtual forum with the travel service.

2. The method of claim 1 wherein defining the virtual forum comprises:
defining an event page, a private feed, or an account in the virtual social network.

3. The method of claim 1 or claim 2 wherein the virtual forum is associated with a user profile of a service provider providing the travel service, the user profile being one of a plurality of user profiles comprising the virtual social network.

4. The method of any of claims 1 to 3 further comprising:
in response to a traveler booking the travel service, sending a link request to a user profile of the traveler requesting the user profile be linked to the virtual forum.

5. The method of claim 4 further comprising:
in response to the traveler accepting the link request, defining a link between the user profile and the virtual forum.

6. The method of claim 5 further comprising:
in response to the user profile being linked to the virtual forum and the traveler being in communication with the virtual social network through an application, transmitting data from the virtual forum to the application for display to the traveler.

7. The method of claim 6 wherein the data is pushed out to the application by the virtual forum in response to the data being added to the virtual forum.

8. The method of any of claims 1 to 7 wherein the virtual forum is linked to a first plurality of user profiles each associated with a corresponding traveler of the plurality of travelers booked on the travel service, and further comprising:
receiving data from one of the user profiles of first plurality of user profiles; and
adding the data to the virtual forum.

9. The method of claim 8 further comprising:
defining a first access level providing access to only a first portion of the virtual forum;
defining a second access level providing access to only a second portion of the virtual forum;
providing each user profile of the first plurality of user profiles with the first access level; and
providing each user profile of a second plurality of user profiles that are not linked to the virtual forum with the second access level.

10. The method of any of claims 1 to 9 wherein the virtual forum is linked to a plurality of user profiles, each user profile of the plurality of user profiles being associated with a traveler booked on the travel service, and further comprising:
receiving, at the virtual forum, data from a first user profile of the plurality of user profiles;
in response to receiving the data, defining a communication page; and
sending a link request to a second user profile of the plurality of user profiles requesting the second user profile be linked to the communication page.

11. The method of any of claims 1 to 10 further comprising:
in response to a traveler booking the travel service, receiving data identifying a social media account of the traveler,
wherein the virtual forum is associated with the travel service based on the data.

12. An apparatus for communicating using a virtual social network, the apparatus comprising:
one or more processors; and
a memory including instructions that, when executed by the one or more processors, cause the apparatus to:
define a travel service for transporting a plurality of travelers;
in response to defining the travel service, define a virtual forum in the virtual social network; and
associate the virtual forum with the travel service.

13. The apparatus of claim 12 wherein the instructions cause the apparatus to perform any of the methods of claims 2 to 11.

14. A computer program product comprising:
a non-transitory computer-readable storage medium; and
instructions stored on the non-transitory computer-readable storage medium that, when executed by a processor, cause the processor to:
define a travel service for transporting a plurality of travelers;
in response to defining the travel service, define a virtual forum in a virtual social network; and
associate the virtual forum with the travel service.

15. The computer program product of claim 14 wherein the instructions cause the processor to perform any of the methods of claims 2 to 11.
